# EUROPEAN PATENT APPLICATION

(11) **EP 3 239 112 A1**
(43) Date of publication of application: **01.11.2017**
(21) Application number: 15872706.5
(22) Date of filing: 08.12.2015
(51) Int. Cl.: C03C 27/12, B32B 17/06, B60J 1/00, B60S 1/02, B60S 1/58, E06B 7/28, H01Q 1/22, H01R 4/58

(54) **ELECTRIC CONNECTION MEMBER AND A LAMINATE PLATE USING SAME**

(30) Priority: 24.12.2014 JP 2014260028
(71) Applicant: Asahi Glass Company, Limited, Tokyo 100-8405 (JP)
(72) Inventor: MIYASAKA,Seiichi, Tokyo 100-8405 (JP); TAKEUCHI,Shoichi, Tokyo 100-8405 (JP); SAITO,Yohei, Tokyo 100-8405 (JP)
(74) Representative: Müller-Boré & Partner Patentanwälte PartG mbB
(86) International application number: PCT/JP2015/084387
(87) International publication number: WO 2016/104137

(57) **Abstract**

An electrical connection member shaped as a foil for feeding power to an electrical functional part arranged between a first platelike body and a second platelike body that form a laminated plate includes a connection portion located between the first platelike body and the second platelike body, and electrically connected to the electrical functional part; a feeding portion that is extended from the connection portion; and a folded portion formed between the connection portion and the feeding portion, and configured to cover at least a part of an edge portion of the first platelike body or the second platelike body. The folded portion includes a portion of increased cross-sectional area.

## Description

### BACKGROUND OF THE INVENTION

### 1. Field of the Invention

The disclosure herein generally relates to an electrical connection member and a laminated plate using the same.

### 2. Description of the Related Art

Conventionally, for example, a laminated glass obtained by bonding two sheets of glass plate via an intermediate film has been known. Such a laminated glass includes a laminated glass interposing an antenna wire between one glass plate and another glass plate, a plurality of heater wires for heating and an electrical functional part such as a bus bar connected to the plurality of heater wires.

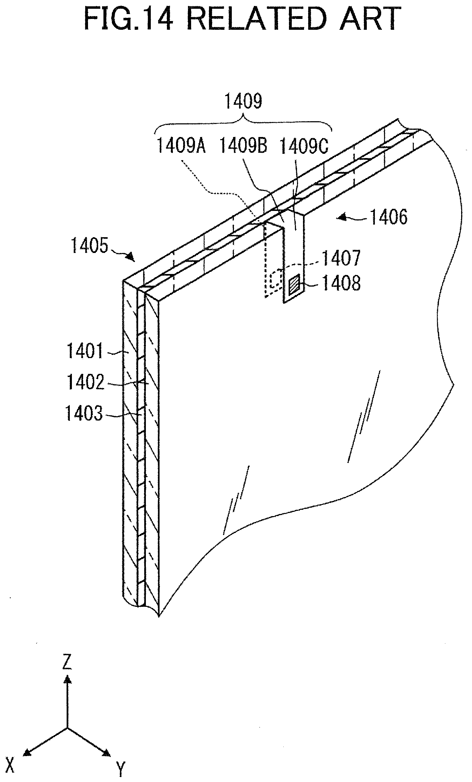

A structure for feeding power to the electrical functional part includes a structure using an electrical connection member shaped as a thin foil, referred to as a flat harness. Specifically, in the structure using such an electrical connection member, for example, as illustrated in FIG. 14, when the laminated glass is manufactured, one end of the electrical connection member is tucked into the laminated glass and connected electrically to an electrode of the electrical functional part, and another end of the electrical connection member is drawn to the outside of a surface of the laminated glass. The power is fed to the other end. FIG. 14 is a perspective view depicting an example of the conventional electrical connection member.

The laminated glass illustrated in FIG. 14 has a laminated plate 105 including a first platelike body 1401, a second platelike body 1402, and an intermediate layer 1403. A conductor connection member 1406 includes a connection portion 1407, a feeding portion 1408, and a folded portion 1409. The folded portion 1409 includes an internal portion 1409A, a side portion 1409B, and an external portion 1409C.

For example, a structure in which a part of the electrical connection member drawn to the outside of the surface of the laminated glass is folded back at an edge portion of the laminated glass, and attached to the exterior surface side of the laminated glass has been proposed (See, for example, Patent Document 1 and Patent Document 2).

### [Citation List]

### [Patent Literature]

[PTL 1] Japanese Translation of PCT International Application Publication No. JP-T-2013-530916
[PTL 2] Japanese Translation of PCT International Application Publication No. JP-T-2014-514836

### SUMMARY OF THE INTENTION

### [Technical Problem]

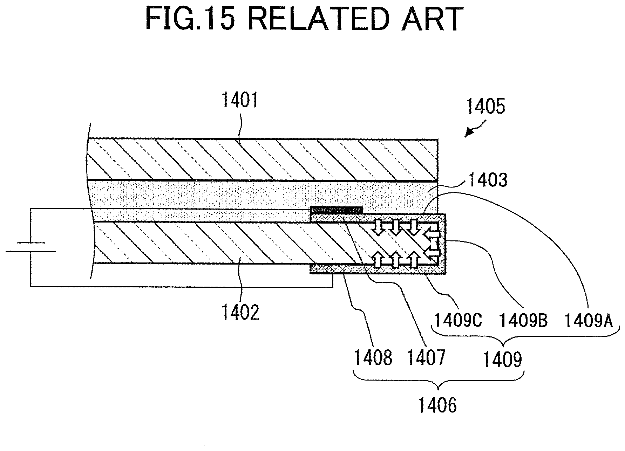

However, in the case of the structure in which the part of the electrical connection member drawn to the outside of the surface of the laminated glass is folded back at the edge portion of the laminated glass, such as Patent Document 1, or Patent Document 2, as indicated by outlined arrows in FIG. 15 that illustrate a cross section cut by a YZ plane at a location where the electrical connection member is arranged in FIG. 14, because heat of the electrical connection member 1406 is transferred to the second platelike body 1402 from three directions, i.e. an interior surface side, an end surface side, and an exterior surface side of the second platelike body 1402, a temperature of the edge portion of the second platelike body 1402 readily rises, and there is a possibility that the second platelike body 1402 cracks due to heat stress. FIG. 15 is a cross-sectional view of the electrical connection member illustrated in FIG. 14.

It should be noted that such a problem due to heat from the electrical connection member also occurs, for example, in the case of a laminated plate in which two glass plates are replaced by a resin plate, in the same way as the laminated plate. Specifically, the resin plate around the edge portion of the laminated plate may deteriorate more quickly.

The present invention aims at providing an electrical connection member that reduces a temperature rise of an edge portion of a laminated plate, and a laminated plate using the same.

### [Solution to Problem]

In order to solve the above problem, according to an aspect of the present invention, an electrical connection member shaped as a foil for feeding power to an electrical functional part arranged between a first platelike body and a second platelike body that form a laminated plate, including
a connection portion located between the first platelike body and the second platelike body, and electrically connected to the electrical functional part;
a feeding portion that is extended from the connection portion; and
a folded portion formed between the connection portion and the feeding portion, and configured to cover at least a part of an edge portion of the first platelike body or the second platelike body,
the folded portion including a portion of increased cross-sectional area, is provided.

### [Advantageous effect of Invention]

According to an aspect of the present invention, an electrical connection member that reduces a rise in temperature of an edge portion of a laminated plate, and a laminated plate using the same are provided.

### BRIEF DESCRIPTION OF THE DRAWING

Other objects and further features of embodiments will become apparent from the following detailed description when read in conjunction with the accompanying drawings, in which:
[FIGURE 1]

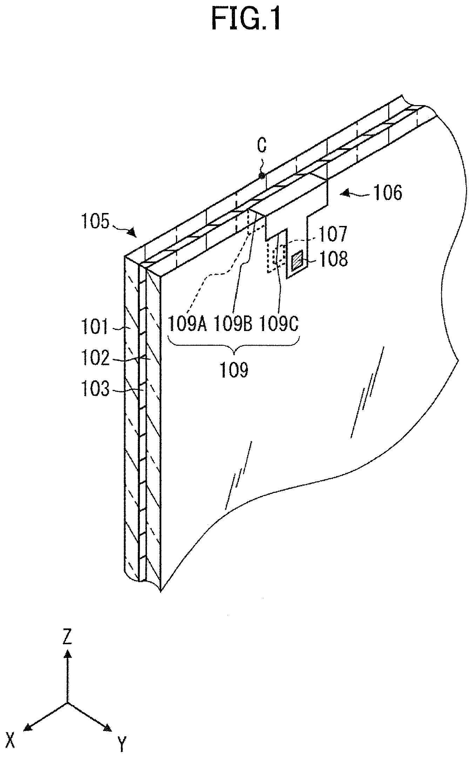

   FIG. 1 is a perspective view depicting an example of a laminated plate on which an electrical connection member according to a first embodiment of the present invention is arranged.
[FIGURE 2]

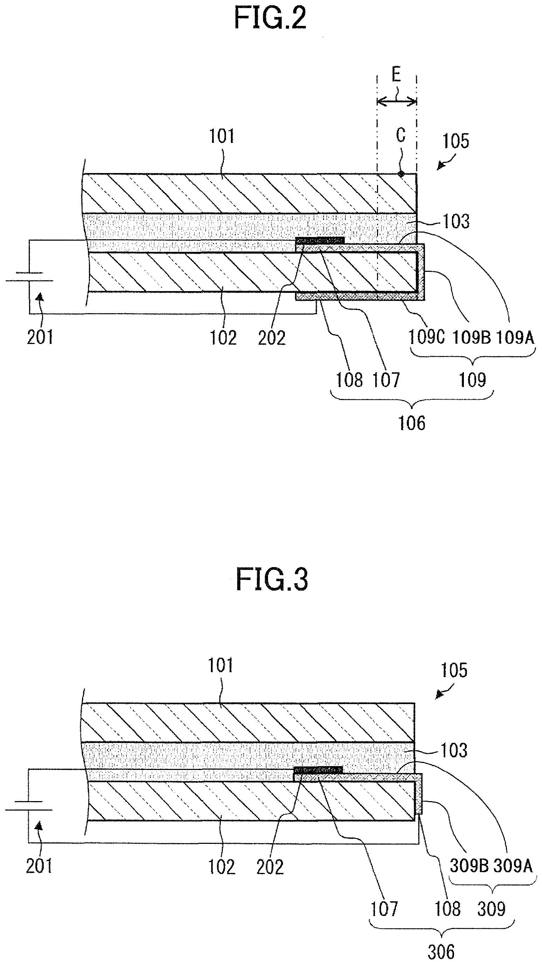

   FIG. 2 is a cross-sectional view depicting an example of the laminated plate on which the electrical connection member according to the first embodiment of the present invention is arranged.
[FIGURE 3]
   FIG. 3 is a cross-sectional view depicting a first variation of the laminated plate on which the electrical connection member according to the first embodiment of the present invention is arranged.
[FIGURE 4]

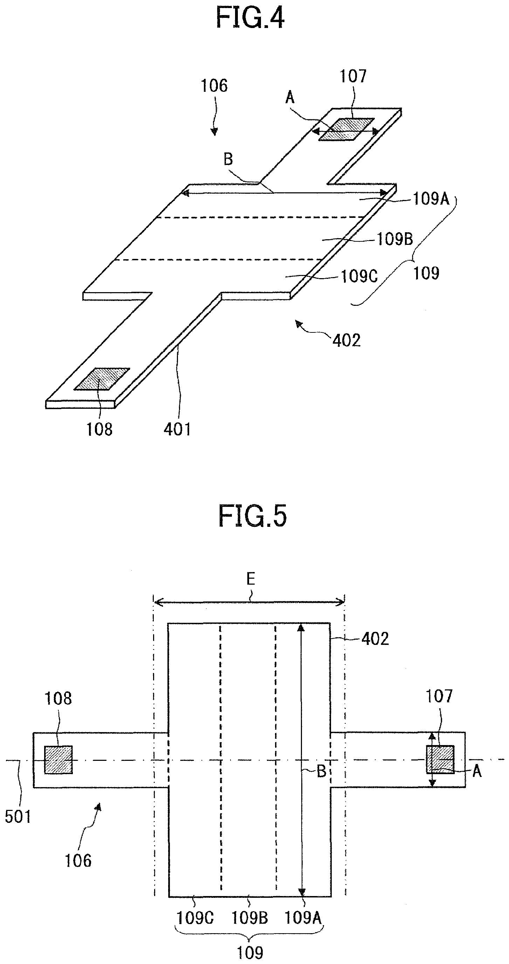

   FIG. 4 is a perspective view depicting an example of the electrical connection member according to the first embodiment of the present invention.
[FIGURE 5]
   FIG. 5 is a plan view depicting an example of the electrical connection member according to the first embodiment of the present invention.
[FIGURE 6]

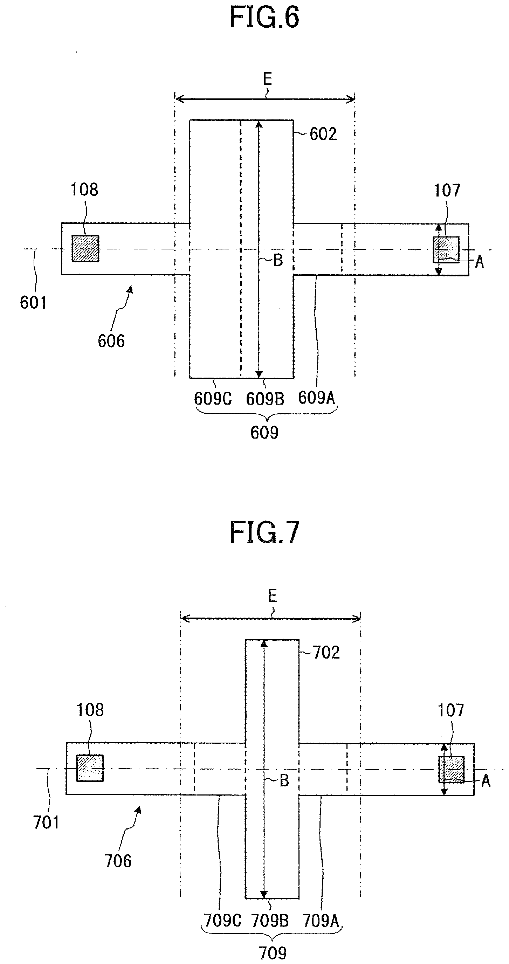

   FIG. 6 is a plan view depicting a second variation of the electrical connection member according to the first embodiment of the present invention.
[FIGURE 7]
   FIG. 7 is a plan view depicting a third variation of the electrical connection member according to the first embodiment of the present invention.
[FIGURE 8]

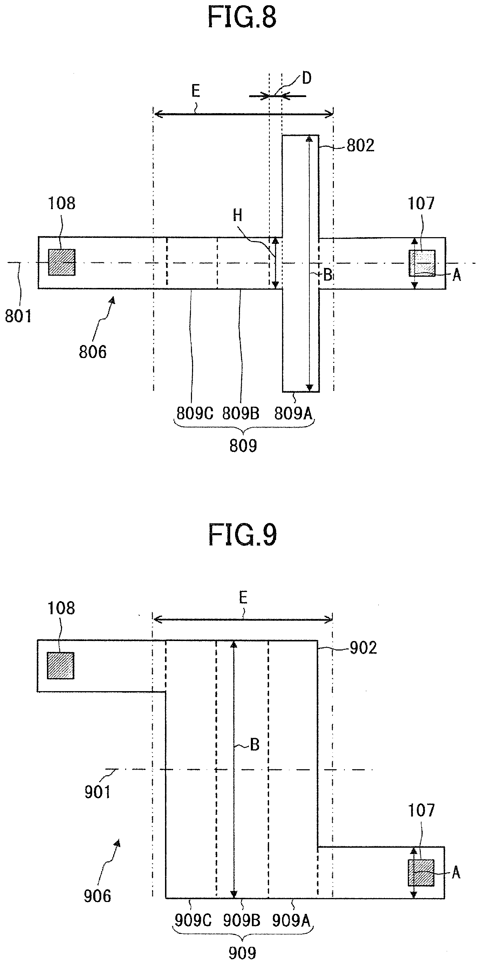

   FIG. 8 is a plan view depicting a fourth variation of the electrical connection member according to the first embodiment of the present invention.
[FIGURE 9]
   FIG. 9 is a plan view depicting a fifth variation of the electrical connection member according to the first embodiment of the present invention.
[FIGURE 10]

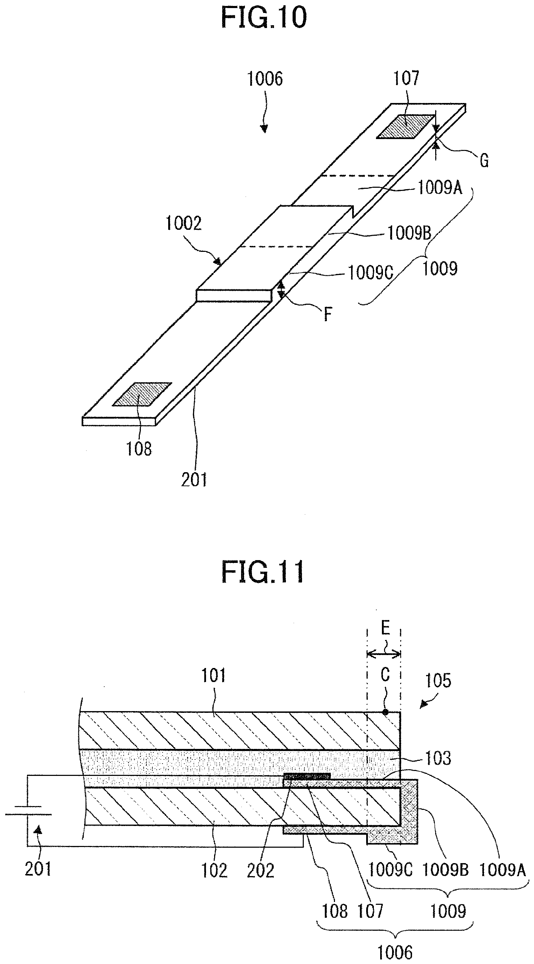

   FIG. 10 is a perspective view depicting an example of an electrical connection member according to a second embodiment of the present invention.
[FIGURE 11]
   FIG. 11 is a cross-sectional view depicting an example of a laminated plate on which the electrical connection member according to the second embodiment is arranged.
[FIGURE 12]

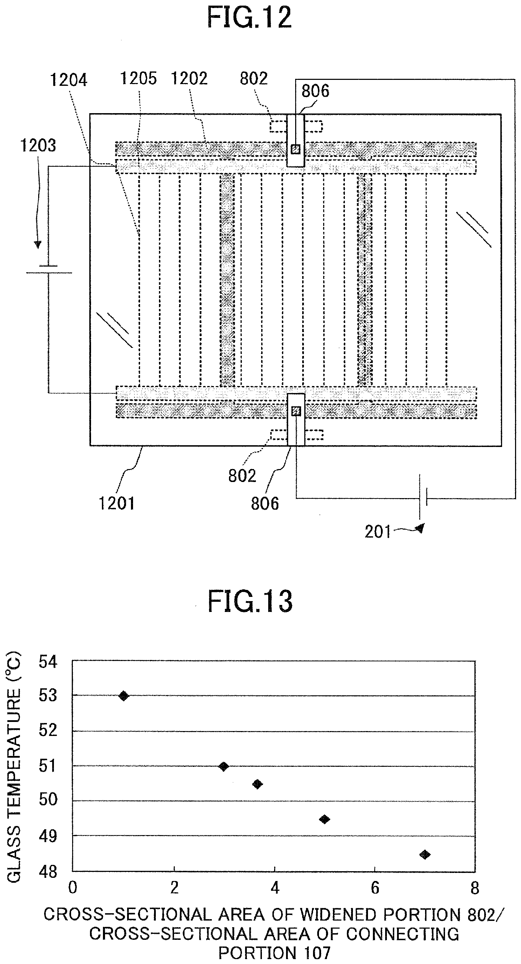

   FIG. 12 is a plan view depicting an experimental system performed in the present application.
[FIGURE 13]
   FIG. 13 is a diagram depicting an example of a relation between a ratio of a cross-sectional area of a widened portion 802 to a cross-sectional area of a connection portion 107 of the electrical connection member 106 and a glass temperature.
[FIGURE 14]
   FIG. 14 is a perspective view depicting an example of an electrical connection member in the related art.
[FIGURE 15]
   FIG. 15 is a cross-sectional view depicting the electrical connection member illustrated in FIG. 14.

### DETAILED DESCRIPTION OF THE PREFERRED EMBODIMENTS

In the following, with reference to drawings, specific embodiments of an electrical connection member and a laminated plate using the same according to the present invention will be described. In the drawings for describing the embodiment, in the absence of a specific description with respect to a direction, the direction refers to a direction on the drawings. Reference directions in the respective drawings correspond to directions of symbols or numerals.

Moreover, the term "electrically connecting" may refer to connecting a member P1 and a member P2 by directly contacting with each other, or may refer to connecting via a conductive member other than the members P1, P2. Furthermore, the term "electrically connecting" also includes the case where the members P1, P2 are separated by a predetermined interval, but electrically conducting with each other in terms of high-frequency.

### (First embodiment and first variation)

FIG. 1 is a perspective view depicting an example of an electrical connection member according to a first embodiment of the present invention arranged on a laminated plate. FIG. 2 is a cross-sectional view depicting an example of the laminated plate cut by a YZ plane at a location where the electrical connection member, illustrated in FIG. 1, is arranged.

The laminated plate 105 according to the embodiment includes a first platelike body 101 and a second platelike body 102 which are laminated via an intermediate layer 103, and is provided with an electrical functional part 202 interposed between the first platelike body 101 and the second platelike body 102. The electrical connection member 106 according to the embodiment electrically connects the electrical functional part 202 with an external power source 201, and is assumed to enable the electrical functional part 202 to express a function thereof.

The first platelike body 101 has a first main surface arranged on an opposite side to the intermediate layer 103, and a second main surface contacting the intermediate layer 103. Moreover, the second platelike body 102 has a third main surface contacting the intermediate layer 103 and a fourth main surface arranged an opposite side to the intermediate layer 103.

Materials and uses of the first platelike body 101, the second platelike body 102 and the intermediate layer 103 forming the laminated plate 105 are not particularly limited. In the embodiment, the laminated plate 105 is, for example, applied to a laminated glass for a vehicle. However, the laminated plate 105 is not limited to the application to the laminated glass for a vehicle. The laminated plate 105 may be, for example, a structure in which a plurality of plates formed of a resin material such as polycarbonate are laminated. Moreover, the laminated plate 105 can be applied also to a laminated glass such as a front windshield, a roof glass and a side glass for a vehicle, or an architectural glass.

The electrical functional part 202 is not particularly limited as long as it is a member that is interposed between the first platelike body 101 and the second platelike body 102 and performs an electric function, such as an antenna conductor, a defogger and a bus bar for defrosting, or a deicer for snow melting.

The electrical connection member 106 is located between the first platelike body 101 and the second platelike body 102, and includes a connection portion 107 for electrically connecting to the electrical functional part 202; a feeding portion 108 extended from the connection portion 107 and electrically connecting to an external power source; and a folded portion 109 formed between the connection portion 107 and the feeding portion 108, and covering at least a part of an edge portion E of the first platelike body 101 or the second platelike body 102.

In the embodiment, the folded portion 109 includes an internal portion 109A interposed between the first platelike body 101 and the second platelike body 102; a side portion 109B opposite to an end surface of the laminated plate 105; and an external portion 109C opposite to a surface of the laminated plate 105. The folded portion 109 has a U-shape that covers a part of the edge portion E of the first platelike body 101 or the second platelike body 102.

The edge portion E includes an end surface of the first platelike body 101 or the second platelike body 102, and refers to a region of up to 50 mm inwards from the surface of a periphery of the laminated plate 105, when the laminated plate 105 is viewed in a plan view, preferably up to 40 mm, more preferably up to 30 mm, further preferably up to 20 mm, and further preferably up to 10 mm. In other words, a region extending inwards from the surface of the periphery of the laminated plate 105 refers to a region of the laminated plate 105 that becomes hot due to heat from three directions, i.e. an interior surface side, an end surface side and an exterior surface side, in a state where the electrical connection member 106 is attached to the laminated plate 105 as in the embodiment. In the following description, the edge portion E of the first platelike body 101 or the second platelike body 102 will be also referred to as an "edge portion E of the laminated plate 105".

FIG. 3 is a cross-sectional view depicting a first variation in which the electrical connection member according to the first embodiment is arranged on a laminated plate. For example, as illustrated in FIG. 3, a folded portion 309 may not be provided with an external portion but have a L-shape in which the feeding portion 108 is arranged on a side portion 309B. The above-described folded portion 309 is also an example of the folded portion that covers a part of the edge portion E, formed with an internal portion 309A and the side portion 309B.

Next, the electrical connection member 106 will be described in detail. FIG. 4 is a perspective diagram depicting an example of the electrical connection member according to the embodiment. FIG. 5 is a plan view depicting an example of the electrical connection member illustrated in FIG. 4. The electrical connection member 106 is formed of a conductor shaping as a foil, and a surface other than the connection portion 107 and the feeding portion 108 is covered with an insulator 401.

The connection portion 107 and the feeding portion 108 are indicated as parts having approximately rectangular shapes that are not covered with the insulator 401. However, the shapes of the connection portion 107 and the feeding portion 108 are not particularly limited. Moreover, the connection portion 107 and the feeding portion 108 need not be formed on the same plane, and may be arranged on surfaces of the electrical connection member 106, that are respectively different from each other, for example, on the front surface and the rear surface (opposite to the front surface) of the electrical connection member 106. One of the connection portion 107 and the feeding portion 108 may be formed on both the front side and the rear side of the electrical connection member 106.

At both end portions of the electrical connection member 106, the connection portion 107 and the feeding portion 108 are arranged, respectively. A folded portion 109 is arranged between both the end portions. In the folded portion 109 according to the embodiment, a widened portion 402 having a width greater than the widths of the end portions is formed.

FIGs. 4 and 5 depict a state where regions of the folded portion 109 that become the internal portion 109A, the side portion 109B, and the external portion 109C, respectively, for when the electrical connection member 106 is arranged on the laminated plate 105, are virtually divided by dotted lines. Moreover, FIG. 5 depicts a region of the folded portion 109 that becomes the edge portion E of the laminated plate 105 when the electrical connection member 106 is arranged on the laminated plate 105 by chain double-dashed lines.

The width B of the widened portion 402 is greater than the width A of the electrical connection member 106 in the connection portion 107. By arranging the above-described widened portion 402, in the state where the electrical connection member 106 is arranged on the laminated plate 105, heat caused by an electrical resistance when an electric current flows is radiated in a width direction of the widened portion 402, and thereby the rise in temperature of the edge portion E of the laminated plate 105 is reduced. Moreover, a surface area of the folded portion 109 is increased by arranging the widened portion 402, and thereby heat of the edge portion E can be radiated more easily.

The shape of the widened portion 402 is not particularly limited. In the embodiment, the widened portion 402 has a rectangular shape that is symmetric with respect to a central line 501 extending in the longitudinal direction of the electrical connection member 806, indicated by a dashed-dotted line. However, the widened portion 402 may have an asymmetric shape, or may have a circular shape, an elliptic shape, a polygonal shape, or any other optional shape.

Moreover, the shape of the part between the folded portion 109 and each of the connection portion 107 and the feeding portion 108 is not particularly limited. For example, the part between the connection portion 107 and the folded portion 109 may have a shape of a wedge that becomes narrower from the folded portion 109 (the widened portion 402 of the embodiment) toward the connection portion 107.

FIG. 4 depicts an example in which a thickness of the electrical connection member 106 is uniform over the entire region. However, the thickness may vary depending on a location. For example, a thickness only of a part interposed between the first platelike body 101 and the second platelike body 102 (e.g. the connection portion 107 and around it) may be thinner. In this case, air or water does not readily enter between the first platelike body 101 and the second platelike body 102, and the electrical functional part 202 can be prevented from having problem.

A cross-sectional area of the widened portion 402 is preferably 1.5 times the cross-sectional area of the connection portion 107 or more but 10 times or less, more preferably 2.0 times or more but 9.0 times or less, further preferably 3.0 times or more but 8.0 times or less. When the cross-sectional areas of the widened portion 402 and the connection portion 107 satisfy the above-described relation, an electric power sufficient for the electrical functional part 202 to operate can be supplied, a great effect of thermal dispersion and heat dissipation can be obtained, and thereby a local rise in temperature at the edge part of the laminated plate 105 can be reduced.

The width A of the connection portion 107 is 50 mm or less, preferably 40 mm or less, more preferably 30 mm or less, and further preferably 20 mm or less. When the width A of the connection portion 107 is set in this way, after preparing the laminated plate 105 to interpose the electrical connection member 106, around the connection portion 107, an adhesion strength between the first platelike body 101 or the second platelike body 102 and the intermediate layer 103 can be prevented from decreasing, and air or water does not readily enter between the first platelike body 101 and the second platelike body 102. The lower limit of the width A of the connection portion 107 is preferably, for example, 5 mm or more.

The cross-sectional area of the electrical connection member 106 in the connection portion 107 is preferably 0.5 mm² or more but 5.0 mm² or less, more preferably 0.5 mm² or more but 3.0 mm² or less, and further preferably 0.5 mm² or more but 2.0 mm² or less. When the cross-sectional area of the electrical connection member 106 is set in this way, an electric power sufficient for the electrical functional part 202 to operate can be supplied. Moreover, the effect of thermal dispersion and the effect of heat dissipation by arranging the widened portion 402 become greater. The cross-sectional area of the electrical connection member 106 in the connection portion 107 refers to a cross-sectional area of a cross section when the electrical connection member 106 is cut along the width A and in the thickness direction of the electrical connection member.

The cross-sectional area of the electrical connection member 106 in the widened portion 402 is preferably 2.0 mm² or more but 9.0 mm² or less, and more preferably 3.0 mm² or more but 8.0 mm² or less. When the cross-sectional area of the electrical connection member 106 is set in this way, a greater effect of thermal dispersion and a greater effect of heat dissipation can be obtained. The cross-sectional area of the electrical connection member 106 in the widened portion 402 refers to a cross-sectional area of a cross section when the electrical connection member 106 is cut along the width B and in the thickness direction of the electrical connection member 106.

The thickness of the electrical connection member 106 is preferably 0.01 mm or more but 0.3 mm or less. When the cross-sectional area of the electrical connection member 106 is set in this way, after preparing the laminated plate 105 to interpose the electrical connection member 106, around the connection portion 107, an adhesion force between the first platelike body 101 or the second platelike body 102 and the intermediate layer 103 can be prevented from decreasing, and air or water does not readily enter between the first platelike body 101 and the second platelike body 102. Moreover, when a member such as a molding is attached around the laminated plate 105, a possibility that the thickness of the folded portion 109 or the feeding portion 108 constitutes barriers to the attachment can be reduced, and the degree of freedom of design of attachment becomes higher.

### (Second to fifth variations of the first embodiment)

FIGs. 6, 7, 8 and 9 are plan views of the electrical, connection members 606, 706, 806 and 906 according to the second to fifth variations of the first embodiment of the present invention, respectively. In the FIGs. 6, 7, 8 and 9, to a member having the same configuration as the configuration illustrated in the first embodiment, the same reference numerals as in FIGs. 1, 2, 4 and 5 will be assigned and an explanation thereof will be omitted. Lines 601, 701, 801 and 901 indicate central lines of the electrical connection members 606, 706, 806 and 906, respectively.

In the second variation illustrated in FIG. 6, the widened portion 602 is provided only in the side portion 609B and the external portion 609C portions, from within the folded portion 609 that is virtually illustrated by dashed lines in FIG. 6.

As illustrated in FIG. 6, when the widened portion 602 is not provided at the internal portion 609A to be interposed in the laminated plate 105, in addition to the effect of dispersion for heat caused by an electrical resistance and the effect of heat dissipation by increasing the surface area of the folded portion 609, after preparing the laminated plate 105 to interpose the electrical connection member 606, around the internal portion 609A, an adhesion force between the first platelike body 101 or the second platelike body 102 and the intermediate layer 103 can be prevented from decreasing, and air or water does not enter readily between the first platelike body 101 and the second platelike body 102.

In the third variation illustrated in FIG. 7, the widened portion 702 is provided only at the side portion 709B of the folded portion 709 virtually illustrated by dashed lines in FIG. 7. That is, in a state where the electrical connection member 706 is attached to the laminated plate 105, the widened portion 702 is formed only on the end surface of the edge portion of the laminated plate 105.

When the electrical connection member 706 is configured as illustrated in FIG. 7, in addition to the effect of radiation of heat and the effect of thermal radiation by increasing the surface area of the folded portion 709, after preparing the laminated plate 105 to interpose the electrical connection member 706, around the internal portion 709A, an adhesion force between the first platelike body 101 or the second platelike body 102 and the intermediate layer 103 can be prevented from decreasing, and air or water does not readily enter between the first platelike body 101 and the second platelike body 102. Moreover, because the widened portion 702 is not provided at the external portion 709C that is arranged on the surface of the laminated plate 105, when a member such as a molding is attached around the laminated plate 105, possibility that the width of the external portion 709C constitutes barriers to the attachment can be reduced, and the degree of freedom of design of attachment becomes higher.

In the fourth variation illustrated in FIG. 8, a boundary region is provided on the side portion 809B side of the internal portion 809A, and the widened portion 802 is arranged at a position that is separated from the side portion 809B by a distance D (in the following, referred to as "distance D of boundary region"). The width H of the boundary region that is between the side portion 809B and the widened portion 802 is smaller than the width B of the widened portion 802.

When the electrical connection member 806 is configured as illustrated in FIG. 8, in addition to the effect of radiation of heat caused by an electrical resistance and the effect of thermal radiation by increasing the surface area of the folded portion 809, after preparing the laminated plate 105 to interpose the electrical connection member 806, with respect to the boundary region between the internal portion 809A and an outside air, an adhesion force between the first platelike body 101 or the second platelike body 102 and the intermediate layer 103 can be prevented from decreasing, and air or water does not readily enter between the first platelike body 101 and the second platelike body 102. Moreover, because the widened portion 802 is not provided at the external portion 809C and side portion 809B that are not interposed in the laminated plate 105, when a member such as a molding is attached around the laminated plate 105, possibility that the widths of the external portion 809C and the side portion 809B constitute barriers to the attachment can be reduced, and the degree of freedom of design of attachment becomes higher.

The distance D of the boundary region is preferably, for example, 15 mm or less, more preferably 10 mm or less, and further preferably 5 mm or less. In this way, when the boundary region is provided on the side portion 809B side of the internal portion 809A, and when the width H of the boundary region is smaller than the width of the widened portion 802, after preparing the laminated plate 105 to interpose the electrical connection member 806, a sealing effect increases in the boundary region between the internal portion 809A and an outside air.

The width H of the boundary region may be the same as the width A at the connection portion, or may be smaller than the width A.

In the fifth variation illustrated in FIG. 9, the feeding portion 108 and the connection portion 107 are arranged at positions shifted from the central line 903 extending in the longitudinal direction of the electrical connection member 906, indicated by a dashed-dotted line via the widened portion 902.

When the electrical connection member 906 is configured as illustrated in FIG. 9, in a state where the electrical connection member 906 is provided on the laminated plate 105, the feeding portion 108 and the connection portion 107 are arranged at different positions in a planar view. Therefore, in addition to the effect of radiation of heat caused by an electrical resistance and the effect of thermal radiation by increasing the surface area of the folded portion 909, thermal concentration from the electrical connection member 906 to the laminated plate 105 can be further reduced.

In order to obtain the effect of dispersion for heat caused by an electrical resistance and the effect of heat dissipation by increasing the surface area of the folded portion, a configuration of increasing the width of the entire electrical connection member might be considered; however, such a configuration is not preferable because the cost increases, the degree of freedom of design becomes lower, a structural restriction occurs, an adhesion failure occurs in the laminated plate 105, or the like.

### (Second embodiment)

FIG. 10 is a perspective view depicting an electrical connection member 1006 according to a second embodiment. FIG. 11 is a cross-sectional view depicting a cross section of the laminated plate 105 in a state where the electrical connection member 1006 is arranged on the laminated plate 105. In FIGs. 10 and 11, to a member having the same configuration as the configuration illustrated in the first embodiment, the same reference numeral as in FIGs. 1, 2, 4 and 5 will be assigned and an explanation thereof will be omitted.

At both end portions of the electrical connection member 1006, the connection portion 107 and the feeding portion 108 are arranged, respectively. A folded portion 1009 is arranged between both the end portions. The folded portion 1009 has a thick portion 1002. In the embodiment, the thick portion 1002 is arranged at the side portion 1009B and at the external portion 1009C of the folded portion 1009.

A thickness F of the thick portion 1002 is greater than the thickness G of the electrical connection member 1006 in the connection portion 107. By arranging the above-described thick portion 1002, in the state where the electrical connection member 1006 is arranged on the laminated plate 105, heat caused by an electrical resistance when an electric current flows is radiated in a thickness direction of the thick portion 1002, and thereby the rise in temperature of the edge portion E of the laminated plate 105 is reduced. The above-described widened portions 402, 602, 702, 802, and 902, and the thick portion 1002 are examples of a portion of increased cross-sectional area.

The shape of the thick portion 1002 is not particularly limited. FIG. 10 illustrates the electrical connection portion 1006 so that the thick portion 1002 is clearly distinguished from the other portions. However, the electrical connection portion 1006 may be configured so that the thickness of the folded portion 1009 gradually changes. Moreover, a widened portion may be arranged at any part of the folded portion 1009.

A cross-sectional area of the thick portion 1002 is preferably 1.5 times the cross-sectional area of the connection portion 107 or more but 10 times or less, more preferably 2.0 times or more but 9.0 times or less, further preferably 3.0 times or more but 8.0 times or less. When the cross-sectional area of the thick portion 1002 is set as above, a greater effect of thermal radiation can be obtained, and furthermore a local temperature rise at the edge part of the laminated plate 105 can be reduced.

The width A of the connection portion 107 is 50 mm or less, preferably 40 mm or less, more preferably 30 mm or less, and further preferably 20 mm or less. By setting the width A of the connection portion 107 in this way, an adhesion strength upon pressure bonding the electrical connection member 1006 and the laminated plate 105 can be prevented from decreasing, and the bubbles are not readily generated. The lower limit of the width A of the connection portion 107 is preferably, for example, 5 mm or more.

The cross-sectional area of the electrical connection member 1006 in the connection portion 107 is preferably 0.5 mm² or more but 5.0 mm² or less, more preferably 0.5 mm² or more but 3.0 mm² or less, and further preferably 0.5 mm² or more but 2.0 mm² or less. When the cross-sectional area of the electrical connection member 1006 is set in this way, the effect of dispersion by arranging the thick portion 1002 becomes greater.

The cross-sectional area of the electrical connection member 1006 in the thick portion 1002 is preferably 2.0 mm² or more but 9.0 mm² or less, and more preferably 3.0 mm² or more but 8.0 mm² or less. When the cross-sectional area of the electrical connection member 1006 is set in this way, a greater effect of thermal dispersion can be obtained.

The thickness of the electrical connection member 1006 in the connection portion 107 is preferably 0.01 mm or more but 0.3 mm or less. When the thickness of the electrical connection member 1006 is set in this way, with respect to the connection portion 107, an adhesion strength upon pressure bonding the electrical connection member 1006 and the laminated plate 105 can be prevented from decreasing, and the bubbles are not readily generated.

### EXAMPLES

The electrical connection member 806 according to the embodiment, illustrated in FIG. 8, was arranged on a laminated glass, and temperatures of the glass and the electrical connection member 806 were measured.

FIG. 12 schematically depicts a plan view of the experimental system used for measuring the temperatures of the glass and the electrical connection member 806. A conductor 1202 that is an example of the electrical functional part was embedded into the glass plate 1201, and a feeding section was produced on the front surface side of the glass plate 1201 through the electrical connection member 806 and connected to an external power source 201. Power supply to the electrical connection member 806 was performed from the external power source 201 with 30 A.

Furthermore, in order to simulate a situation for actually being used, to evaluate a rise in temperature of the glass, a heated-wire 1204 and a bus bar 1205 for feeding power to the heated-wire 1204 were arranged. The bus bar 1205 was also fed by an external power source 1203. The heated-wire 1204 and the bus bar 1205 were fed with a voltage of 13.5 V.

Because the widened portion 802, the conductor 1202, the heated-wire 1204 and the bus bar 1205 were inserted into the laminated glass, these members are indicated with dashed lines in FIG. 12. The conductor 1202, the heated-wire 1204 and the bus bar 1205 were embedded in the laminated glass in a state where an intermediate film was inserted between the conductor 1202 and the heated-wire 1204 or the bus bar 1205, and thereby they were insulated.

FIG. 13 is a diagram depicting a relation between a ratio of the cross-sectional area of the widened portion 802 to the cross-sectional area of the connection portion 107 of the electrical connection member 806 and a glass temperature. The glass temperature was measured at the edge portion E of the laminated glass, as indicated by a point C in FIG. 2.

It was found from FIG. 13 that as the cross-sectional area ratio of the widened portion 802 to the connection portion 107 increases, the glass temperature at the edge portion E decreases.

TABLE 1 illustrates, for comparative examples 1, 2, in which a widened portion 802 was not provided, i.e. the width A and the width B are the same all over the electrical connection portion, and for experimental examples 1 to 4, in which a widened portion 802 was provided, dimensions of the respective members of the electrical connection member 806, and results of measurement for the temperature of the electrical connection member 806 when the power was supplied. In TABLE 1, for comparative examples 1, 2, the "cross-sectional area of widened portion 802" corresponds to a cross-sectional area of the electrical connection member 806 that does not have the widened portion 802. It was found from TABLE 1 that when the widened portion 802 was arranged, the temperature of the electrical connection portion 806 decreased. It was also found that because the rise in temperature of the glass plate 1201 is generated by heat transferred from the electrical connection member 806 to the glass, the rise in temperature of the edge portion of the glass plate 1201 can be reduced from the results of measurement in TABLE 1.

Moreover, it was found that the smaller the cross-sectional area of the connection portion 107, the greater was the effect of decreasing the temperature of the electrical connection member 106 by the widened portion 802. Because the heat generated by the power supply becomes greater with smaller cross-sectional area of the connection portion 107, the effect of decreasing the temperature of the electrical connection member 106 by the widened portion 802 was considered to become greater.

**[TABLE 1]**

| | **thickness (mm)** | **width A (mm)** | **width B (mm)** | **cross-sectional area of connection portion 107 (mm²)** | **cross-sectional area of widened portion 802 (mm²)** | **temperature of electrical connection member 106 (°C)** |
|---|---|---|---|---|---|---|
| **comparative example 1** | 0.1 | 10 | 10 | 1 | 1 | 64.4 |
| **experimental example 1** | 0.1 | 10 | 30 | 1 | 3 | 57.4 |
| **experimental example 2** | 0.1 | 10 | 70 | 1 | 7 | 56.5 |
| **comparative example 2** | 0.1 | 15 | 15 | 1.5 | 1.5 | 52.9 |
| **experimental example 3** | 0.1 | 15 | 55 | 1.5 | 5.5 | 47.8 |

### INDUSTRIAL APPLICABILITY

The electrical connection member and the laminated plate using the same, disclosed in the present application can be preferably applied to the case of feeding power to an electrical functional part, such as an antenna conductor or a bus bar conductor that is embedded inside a laminated glass.

The present application is based on and claims the benefit of priority of Japanese Priority Application No. 2014-260028 filed on December 24, 2014, the entire contents of which are hereby incorporated by reference.

### REFERENCE SIGNS LIST

101 first platelike body
102 second platelike body
103 intermediate layer
105 laminated plate
106,306,606,706,806,906,1006 electrical connection member
107 connection portion
108 feeding portion
109,309,609,709,809,909,1009 folded portion
109A, 309A, 609A, 709A, 809A, 909A, 1009A internal portion
109B,309B,609B,709B,809B,909B,1009B side portion
109C, 309C, 609C, 709C, 809C, 909C, 1009C external portion
201 external power source
202 electrical functional part
401 insulator
402,602,702,802,902,1002 widened portion
501,601,701,801,901 central line
1201 glass plate
1202 conductor
1203 external power source
1204 heated-wire
1205 bus bar
A width of connection portion
B width of widened portion
C temperature measuring point
D distance of boundary region
E edge portion
F thickness of thick portion
G thickness of connection portion
H width of boundary region

## Claims

1. An electrical connection member shaped as a foil for feeding power to an electrical functional part arranged between a first platelike body and a second platelike body that form a laminated plate, the electrical connection member comprising:
a connection portion located between the first platelike body and the second platelike body, and electrically connected to the electrical functional part;
a feeding portion that is extended from the connection portion; and
a folded portion formed between the connection portion and the feeding portion, and configured to cover at least a part of an edge portion of the first platelike body or the second platelike body,
wherein the folded portion includes a portion of increased cross-sectional area.

2. The electrical connection member according to claim 1,
wherein a cross-sectional area of the electrical connection member at the portion of increased cross-sectional area is 1.5 times a cross-sectional area of the electrical connection member at the connection portion or more but 10 times the cross-sectional area of the electrical connection member at the connection portion or less.

3. The electrical connection member according to claim 1 or 2,
wherein a cross-sectional area of the electrical connection member at the connection portion is 0.5 mm² or more but 2.0 mm² or less.

4. The electrical connection member according to any one of claims 1 to 3,
wherein a cross-sectional area of the electrical connection member at the portion of increased cross-sectional area is 2.0 mm² or more but 9.0 mm² or less.

5. The electrical connection member according to any one of claims 1 to 4,
wherein a width of the electrical connection member at the connection portion is 5 mm or more but 50 mm or less.

6. The electrical connection member according to any one of claims 1 to 5,
wherein a thickness of the electrical connection member at the connection portion is 0.01 mm or more but 0.3 mm or less.

7. The electrical connection member according to any one of claims 1 to 6,
wherein the folded portion includes an internal portion that is interposed between the first platelike body and the second platelike body, a side portion that faces an end surface of the first platelike body or the second platelike body, and an external portion that faces a front surface of the laminated plate, and
wherein the portion of increased cross-sectional area is formed at the side portion and at the external portion.

8. The electrical connection member according to any one of claims 1 to 7,
wherein the portion of increased cross-sectional area is a widened portion having a width that is greater than widths of both end portions of the folded portion.

9. The electrical connection member according to any one of claims 1 to 8,
wherein the portion of increased cross-sectional area is a thick portion having a thickness that is greater than a thickness of the electrical connection member at the connection portion.

10. The electrical connection member according to any one of claims 1 to 6,
wherein the portion of increased cross-sectional area is a widened portion having a width that is greater than widths of both end portions relative to the folded portion,
wherein the folded portion includes an internal portion that is interposed between the first platelike body and the second platelike body, a side portion that faces an end surface of the first platelike body or the second platelike body, and an external portion that faces a front surface of the laminated plate,
wherein the widened portion is arranged at a part of the internal portion, and
wherein a boundary region having a width that is smaller than the width of the widened portion is arranged on a side portion side of the internal portion.

11. A laminated plate provided with a first platelike body and a second platelike body that is bonded to the first platelike body via an intermediate layer, the laminated plate comprising:
an electrical functional part interposed between the first platelike body and the second platelike body; and
an electrical connection member shaped as a foil, which is connected to the electrical functional part and feeds power to the electrical functional part,
wherein the electrical connection member is the electrical connection member according to any one of claims 1 to 10.

12. The laminated plate according to any one of claims 1 to 11,
wherein the laminated plate is a laminated glass.
